# EUROPÄISCHE PATENTSCHRIFT

(11) **EP 3 332 137 B1**
(45) Veröffentlichungstag und Bekanntmachung des Hinweises auf die Patenterteilung: **26.06.2019**
(21) Anmeldenummer: 16765914.3
(22) Anmeldetag: 03.08.2016
(51) Int. Cl.: F16C 43/06, F16C 43/08, F16C 19/36, F16C 33/36, F16C 33/58, F16C 19/22, F16C 33/46, F16C 33/49

(54) **SCHRÄGROLLENLAGER SOWIE VERFAHREN UND VORRICHTUNG ZU DESSEN MONTAGE**
ANGULAR CONTACT ROLLER BEARING AND METHOD AND DEVICE FOR THE ASSEMBLY THEREOF
ROULEMENT À ROULEAUX À CONTACT OBLIQUE AINSI QUE PROCÉDÉ ET DISPOSITIF POUR SON MONTAGE

(30) Priorität: 04.08.2015 DE 102015214845
(43) Veröffentlichungstag der Anmeldung: 13.06.2018
(73) Patentinhaber: Schaeffler Technologies AG & Co. KG, 91074 Herzogenaurach (DE)
(72) Erfinder: HOFMANN, Heinrich, 97422 Schweinfurt (DE); EIDLOTH, Rainer, 91074 Herzogenaurach (DE); RUMPEL, Reinhard, 97228 Rottendorf (DE)
(86) Internationale Anmeldenummer: PCT/DE2016/200356
(87) Internationale Veröffentlichungsnummer: WO 2017/020908

(56) Entgegenhaltungen:
- DE-A1- 2 154 545
- DE-A1- 2 420 210
- DE-A1- 2 651 827
- DE-C- 344 090

## Beschreibung

### Gebiet der Erfindung

Die Erfindung betrifft ein insbesondere einreihiges Schrägrollenlager nach den oberbegriffsbildenden Merkmalen des Patentanspruchs 1, weiches insbesondere vorteilhaft als Festlager zur Lagerung der Hauptwelle in einem Kraftfahrzeug-Getriebe anwendbar ist. Darüber hinaus betrifft die Erfindung zwei Varianten eines Verfahrens und einer Vorrichtung zur Montage des Schrägrollenlagers.

### Hintergrund der Erfindung

Der als Festlager zur Lagerung der Hauptwelle in einem Kraftfahrzeug-Getriebe am häufigsten verwendete Lagertyp ist das einreihige Rillenkugellager, da dieses sich durch eine gleichermaßen hohe radiale und axiale Tragfähigkeit auszeichnet und wegen seiner geringen Reibung die höchsten Drehzahlgrenzen aller Lagerarten aufweist. Dieses Rillenkugellager besteht in bekannter Weise aus einem äußeren Lagerring und einem inneren Lagerring sowie aus einer Vielzahl zwischen den Lagerringen angeordneter Lagerkugeln, die in in die Innenseite des äußeren Lagerrings und in die Außenseite des inneren Lagerrings eingearbeitete rillenförmigen Laufbahnen abrollen und durch einen Lagerkäfig in gleichmäßigen Abständen zueinander geführt werden. Das Einsetzten der Lagerkugeln in das Rillenkugellager erfolgt dabei zumeist durch das mit der DE 168 499 A1 bekannt gewordene Exzentermontageverfahren, bei dem die beiden Lagerringe exzentrisch zueinander angeordnet werden und der dadurch entstehende freie Raum zwischen den Lagerringen mit den Lagerkugeln befüllt wird, anschließend die Lagerringe unter Ausnutzung ihrer Elastizität in eine konzentrische Stellung zueinander gebracht werden und nach einer gleichmäßigen Umfangsverteilung der Lagerkugeln der Lagerkäfig eingesetzt wird.

In der Praxis hat es sich jedoch erwiesen, dass derartigen Rillenkugellagern aufgrund der geringen maximal einbaubaren Anzahl von Lagerkugeln, die von den Abmessungen des inneren und des äußeren Lagerrings sowie vom Durchmesser der Lagerkugeln abhängig ist, vor allem in Bezug auf die radiale Tragfähigkeit des Lagers immer gewisse Grenzen gesetzt sind. In der Vergangenheit wurden daher eine Vielzahl von Lösungen, wie beispielsweise eine in den sich gegenüberliegenden Borden der Laufbahnen des äußeren und des inneren Lagerrings angeordnete unverschlossene Einfüllöffnung gemäß DE 151 483 A1 oder eine ähnlich ausgebildete verschließbare Einfüllöffnung gemäß DE 24 07 477 A1, vorgeschlagen, mit denen durch eine Erhöhung der Anzahl der Lagerkugeln eine Erhöhung der radialen Tragfähigkeit von Rillenkugellagern erreicht werden sollte, die sich aber aufgrund der aus solchen Einfüllöffnungen resultierenden Nachteile in der Praxis nicht durchsetzen konnten.

Eine andere naheliegende Möglichkeit, die Tragfähigkeit des Festlagers zur Lagerung der Hauptwelle in einem Kraftfahrzeug-Getriebe zu erhöhen, wäre der Ersatz des bisher verwendeten Rillenkugellagers durch ein Zylinderrollenlager vom Typ NUP, wie es beispielsweise aus dem Katalog "Wälzlager" der Anmelderin vom Oktober 2008 auf den Seiten 393 und 396 bekannt ist. Dieses Zylinderrollenlager weist sowohl am inneren Lagerring als auch am äußeren Lagerring zwei seitliche Borde auf und ist zur Aufnahme hoher Radiallasten sowie von Axiallasten in beide Richtungen geeignet. Derartige Zylinderrollenlager weisen jedoch durch den hohen Anteil spanender Bearbeitung, insbesondere bei der Laufbahnherstellung und bei der Bordbearbeitung, sehr hohe Fertigungskosten auf und wären zudem in ihrer Tragfähigkeit wiederum überdimensioniert, so dass diese für den Einsatz als Festlager in Kraftfahrzeug-Schaltgetrieben letztendlich ungeeignet sind.

Ein weiterer, zur als Festlager zur Lagerung der Hauptwelle in einem Kraftfahrzeug-Getriebe geeigneter und für die vorliegende Erfindung den nächstliegenden Stand der Technik bildender Lagertyp, dessen Aufnahmefähigkeit von Radialkräften und von Axialkräften in beide Richtungen größer als die von Rillenkugellagern ist, ist durch die Druckschriften DE 6 917 609 U und CH 463 886 A bekannt geworden. In diesen Druckschriften wird jeweils ein Schrägrollenlager offenbart, welches im Wesentlichen aus einem inneren Lagerring mit einer an dessen äußerer Mantelfläche schräg zur radialen Lagerachse angeordneten inneren Laufbahn und einem diese Laufbahn an ihrem kleinsten Durchmesser begrenzenden Bord, aus einem äußeren Lagerring mit einer an dessen innerer Mantelfläche ebenfalls schräg zur radialen Lagerachse angeordneten äußeren Laufbahn und einem diese Laufbahn an ihrem größten Durchmesser begrenzenden Bord sowie aus einer Vielzahl zwischen den Lagerringen angeordneter und auf deren Laufbahnen abrollender Rollenwälzkörper besteht, die in Umfangsrichtung durch einen Lagerkäfig in gleichmäßigen Abständen zueinander gehalten werden. Zur Ermöglichung des Einsetzens der als Kegelrollen ausgebildeten Wälzkörper in den jeweils als Taschen- bzw. als Fensterkäfig ausgebildeten Lagerkäfig ist bei dem Schrägrollenlager gemäß DE 6 917 609 U der Bord am inneren Lagerring und bei dem Schrägrollenlager gemäß CH 463 886 A der Bord am äußeren Lagerring als separates Bauteil ausgebildet, der nach der Lagermontage am inneren bzw. äußeren Lagerring befestigt wird. Dies erfolgt bei dem Schrägrollenlager gemäß DE 6 917 609 U durch einen gesonderten geschlitzten, im Querschnitt U-förmigen Ring, dessen radiale Schenkel in entsprechende Nuten im Bord und im inneren Lagerring eingreifen, und bei dem Schrägrollenlager gemäß CH 463 886 A durch einen an die Unterseite des Bordes angeformten umlaufenden Bund, der in den äußeren Lagerring eingepresst wird.

Bei derartigen Schrägrollenlagern sind zwar dadurch, dass nur noch einer der Lagerringe mit nur noch einem seitlichen Bord einteilig ausgebildet ist, der Anteil der spanenden Bearbeitung bei der Laufbahnherstellung und bei der Bordbearbeitung und damit auch die Gesamtkosten für die Lagerfertigung wesentlich geringer als bei dem vorbeschriebenen Zylinderrollenlager, dennoch wirkt sich bei diesen Schrägrollenlagern die Ausbildung des Bordes am jeweils anderen Lagerring als separate Bordscheibe, deren zusätzliche Montage an diesem Lagerring sowie die erforderliche Präzisionsfertigung der Anlageflächen an diesen und dem zugehörigen Lagerring ungünstig auf deren Herstellungskosten aus. Außerdem besteht bei diesen Schrägrollenlagern die Gefahr, dass die Befestigung der separaten Bordscheibe nicht ausreichend ist, um auch hohen radialen oder axialen Belastungsspitzen standzuhalten, so dass sich die Bordscheibe im Lagerbetrieb lösen kann und es letztendlich zum Lagerausfall kommt. Aus der Druckschrift DE 344090 ist ein Schrägrollenlager bekannt, bei dem die Borde einteilig mit den Lagerringen ausgebildet sind.

### Aufgabe der Erfindung

Ausgehend von den dargelegten Nachteilen der Lösungen des bekannten Standes der Technik liegt der Erfindung deshalb die Aufgabe zu Grunde, ein insbesondere einreihiges Schrägrollenlager, zu konzipieren, welches eine höhere radiale und axiale Tragfähigkeit als ein Rillenkugellager aufweist und welches sich durch einen niedrigen Anteil der spanenden Bearbeitung bei der Laufbahn- und Bordherstellung sowie durch einen niedrigen Montageaufwand und damit durch geringe Gesamtkosten für die Lagerfertigung auszeichnet.

### Beschreibung der Erfindung

Erfindungsgemäß wird diese Aufgabe bei einem Schrägrollenlager nach dem Oberbegriff des Anspruchs 1 zunächst derart gelöst, dass die die Laufbahnen jeweils einseitig begrenzenden Borde jeweils einteilig mit den Lagerringen ausgebildet sind und der größte Durchmesser der inneren Laufbahn kleiner ist als die Summe aus dem kleinsten Durchmesser der inneren Laufbahn und der Höhe des die innere Laufbahn begrenzenden Bordes und dass der kleinste Durchmesser der äußeren Laufbahn kleiner ist als der größte Durchmesser der äußeren Laufbahn abzüglich der Höhe des die äußere Laufbahn begrenzenden Bordes.

Bevorzugte Ausgestaltungen und vorteilhafte Weiterbildungen des erfindungsgemäß ausgebildeten Schrägrollenlagers werden in den Unteransprüchen 2 bis 7 beschrieben.

Danach ist es gemäß Anspruch 2 bei dem erfindungsgemäß ausgebildeten Schrägrollenlager vorgesehen, dass die Rollenwälzkörper bevorzugt als Kegelrollen ausgebildet sind, die einen Kegelwinkel im Bereich von 2° bis 6° aufweisen und in einem Hüllkreiswinkel zwischen 7° bis 20° auf ihren Laufbahnen abrollen. Bei Anwendung des erfindungsgemäß ausgebildeten Schrägrollenlagers als Festlager zur Lagerung der Hauptwelle in einem Kraftfahrzeug-Getriebe hat sich dabei aufgrund der auftretenden Radial- und Axiallasten ein Kegelwinkel von 4° und ein Hüllkreiswinkel von 14° als besonders geeignet erwiesen. Es ist jedoch anzumerken, dass die erfindungsgemäße Ausbildung nicht auf ein Kegelrollenlager beschränkt sein soll, da in gleicher Weise auch andere Rollenlager mit schräg zur Lagermittelachse angeordneten Rollenachsen derart ausgebildet werden können. So können anstelle der beispielhaft angeführten Kegelrollen auch Zylinderrollen oder Nadeln oder Rollen mit sphärischen Mantelflächen, wie Pendel- oder Tonnenrollen, verwendet werden.

Nach Anspruch 3 ist es ein weiteres Merkmal des erfindungsgemäß ausgebildeten Schrägrollenlagers, dass der an der kleineren Durchmesserseite der Rollenwälzkörper bestehende Spalt zwischen den Lagerringen kleiner als der an der größeren Durchmesserseite der Rollenwälzkörper bestehende Spalt zwischen den Lagerringen ausgebildet und so bemessen ist, dass das zweifache seines Maßes größer als der größte Durchmesser der Rollenwälzkörper ist. Eine solche Dimensionierung des Spaltes zwischen dem inneren und dem äußeren Lagerring ist notwendig, um das Einsetzen der Rollenwälzkörper in das Schrägrollenlager nach dem im Anschluss beschriebenen Montageverfahren zu ermöglichen.

Gemäß Anspruch 4 zeichnet sich das erfindungsgemäß ausgebildete Schrägrollenlager darüber hinaus noch dadurch aus, dass der die Laufbahn im inneren Lagerring begrenzende Bord eine Mindesthöhe von ca. 33% und der die Laufbahn im äußeren Lagerring begrenzende Bord eine Mindesthöhe von ca. 21% des größten Durchmessers der Rollenwälzkörper aufweist. Durch eine solche Ausbildung der Borde und der damit einhergehenden Laufbahntiefe ist gewährleistet, dass im Lagerbetrieb auftretende hohe Axialkräfte in die eine Richtung mit möglichst geringer Bordreibung aufgenommen werden können, während geringere Axialkräfte in die andere Richtung über die schrägen Laufbahnen aufgenommen werden.

Eine zweckmäßige Weiterbildung des erfindungsgemäß ausgebildeten Schrägrollenlagers ist es nach den Ansprüchen 5, 6 und 7 schließlich noch, dass der Lagerkäfig bevorzugt durch einen nach der Montage der Rollenwälzkörper in das Radialwälzlager einsetzbaren und aus einem Käfigring sowie aus einer Vielzahl von axialen Käfigstegen bestehenden Kammkäfig gebildet wird. Dieser Lagerkäfig weist an seinen Käfigstegen zusätzlich mehrere gleichmäßig umfangsverteilte und einen kleineren Innendurchmesser als der Käfigring aufweisende Rastnasen auf, durch die der Lagerkäfig entweder an der Innenfläche des Bordes am inneren Lagerrings oder an der Innenfläche des Bordes am äußeren Lagerring axial lagefixierbar ist. Diese Rastnasen werden beim Einsetzen des Lagerkäfigs in das Schrägrollenlager zunächst solange elastisch in Richtung der Käfigstege verformt, bis diese beim Einsetzen des Lagerkäfigs von der kleinen Durchmesserseite der Kegelrollen her hinter den Bord am inneren Lagerring und beim Einsetzen des Lagerkäfigs von der großen Durchmesserseite der Kegelrollen her hinter dem Bord am äußeren Lagerring einrasten. Dadurch wird der durch das Anliegen des Lagerkäfigs an den einen Stirnseiten der Rollenwälzkörper bisher nur in die eine Axialrichtung lagefixierte Lagerkäfig auch in die andere Axialrichtung lagefixiert. Auch hier ist jedoch zu bemerken, dass die Verwendung eines Kammkäfigs als Lagerkäfig nicht auf diese Käfigart beschränkt ist, da es auch möglich ist, den Lagerkäfig als zweiteiligen Blechnietkäfig auszubilden.

Die gestellte Aufgabe wird bei einem erfindungsgemäß ausgebildeten Schrägrollenlager darüber hinaus auch durch ein Montageverfahren nach Anspruch 8 gelöst, welches sich dadurch auszeichnet, dass das Schrägrollenlager nach einem an sich als Montageverfahren für Rillenkugellager bekannten Exzentermontageverfahren montiert wird.

Bei einer ersten Variante dieses Exzentermontageverfahrens wird dabei gemäß dem Anspruch 8 in einem ersten Schritt der innere Lagerring mit seiner mit dem Bord ausgebildeten Stirnseite auf eine horizontale Montageebene mit einer konvexen sichelförmigen Hilfsrampe derart aufgelegt, dass dieser mit seinem Bord an der Innendurchmesserseite der Hilfsrampe anliegt. Danach wird in einem zweiten Schritt der äußere Lagerring mit seiner mit dem Bord ausgebildeten Stirnseite nach oben derart exzentrisch zum inneren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Als dritter Schritt wird dann der entstandene sichelförmige Freiraum zwischen dem äußeren Lagerring und dem inneren Lagerring mit den als Kegelrollen ausgebildeten Rollenwälzkörpern derart befüllt, dass deren kleinere Stirnseiten auf der Schrägseite der Hilfsrampe aufliegen.

Eine zweite Variante des Exzentermontageverfahrens unterscheidet sich von der ersten Variante gemäß dem Anspruch 9 dadurch, dass in einem ersten Schritt der äußere Lagerring mit seiner mit dem Bord ausgebildeten Stirnseite auf eine horizontale Montageebene mit einer konvexen sichelförmigen Hilfsrampe derart aufgelegt wird, dass dieser mit seinem Bord an der Außendurchmesserseite der Hilfsrampe anliegt. Danach wird in einem zweiten Schritt der innere Lagerring mit seiner mit dem Bord ausgebildeten Stirnseite nach oben derart exzentrisch zum äußeren Lagerring angeordnet, dass einerseits die Hilfsrampe zwischen den Lagerringen angeordnet ist und andererseits um 180° zur Mitte der Hilfsrampe versetzt die Lagerringe aneinander anliegen. Der dritte Schritt dieser Variante besteht dann wieder darin, dass der entstandene sichelförmige Freiraum zwischen dem inneren Lagerring und dem äußeren Lagerring mit den als Kegelrollen ausgebildeten Rollenwälzkörpern derart befüllt wird, dass dabei deren größere Stirnseiten auf der Schrägseite der Hilfsrampe aufliegen.

Unabhängig von den beiden Varianten des Exzentermontageverfahrens wird dann nach Anspruch 10 in einem vierten Schritt der äußere Lagerring in Höhe des Berührungspunktes mit dem inneren Lagerring sowie in Höhe eines dem Berührungspunkt um 180° versetzten Punktes an dessen Außenmantelfläche derart eingespannt, dass der äußere Lagerring innerhalb seiner Elastizitätsgrenze geringfügig ovalisiert wird. Anschließend werden nach Anspruch 12 in einem fünften Schritt der innere Lagerring in eine koaxiale Lage zum äußeren Lagerring verschoben und die Rollenwälzkörper in ihren Laufbahnen in den Lagerringen unter Aufhebung der Ovalisierung des äußeren Lagerrings gleichmäßig umfangsverteilt.

Bei Anwendung der ersten Variante des erfindungsgemäßen Exzentermontageverfahrens wird danach gemäß Anspruch 12 in einem sechsten und abschließenden Schritt der als Kammkäfig ausgebildete Lagerkäfig mit seinen Käfigstegen zwischen die Rollenwälzkörper von der Seite mit deren kleineren Stirnseiten her eingeführt und an der Innenfläche des Bordes am inneren Lagerring verrastet. Bei Anwendung der zweiten Variante des erfindungsgemäßen Exzentermontageverfahrens wird dagegen gemäß Anspruch 13 in einem letzten Schritt der als Kammkäfig ausgebildete Lagerkäfig mit seinen Käfigstegen zwischen die Rollenwälzkörper von der Seite mit deren größeren Stirnseiten her eingeführt und an der Innenfläche des Bordes am äußeren Lagerrings verrastet.

Schließlich wird die gestellte Aufgabe bei einem erfindungsgemäß ausgebildeten Schrägrollenlager auch noch durch zwei Varianten einer Vorrichtung zur Durchführung des beschriebenen Montageverfahrens gelöst.

Zur Durchführung der ersten Variante des erfindungsgemäßen Exzentermontageverfahrens wird es dabei gemäß Anspruch 14 vorgeschlagen, dass die mit ihrer Innendurchmesserseite am inneren Lagerring anliegende Hilfsrampe eine sich zum äußeren Lagerring hin mit dem Neigungswinkel der Laufbahn im inneren Lagerring verjüngende Schrägseite sowie eine maximale Rampenhöhe aufweist, die der Höhe des Bordes am inneren Lagerring entspricht. Zur Durchführung der zweiten Variante des erfindungsgemäßen Exzentermontageverfahrens wird es dagegen gemäß Anspruch 15 vorgeschlagen, dass die mit ihrer Außendurchmesserseite am äußeren Lagerring anliegende Hilfsrampe eine sich zum inneren Lagerring hin mit dem Neigungswinkel der Laufbahn im äußeren Lagerring verjüngende Schrägseite sowie eine maximale Rampenhöhe aufweist, die der Höhe des Bordes am äußeren Lagerring entspricht.

Zusammenfassend weist das erfindungsgemäß ausgebildete Schrägrollenlager somit gegenüber den aus dem Stand der Technik bekannten Schrägrollenlagern den Vorteil auf, dass es trotz des mit dem Exzentermontageverfahren maximal erreichbaren Wälzkörperfüllgrades von ca. 60 % eine höhere Tragfähigkeit als ein gleichartig montiertes einreihiges Rillenkugellager aufweist, da die verwendeten Rollenwälzkörper nicht mehr wie bei Lagerkugeln im Punktkontakt sondern im Linienkontakt zu ihren Laufbahnen stehen. Hinsichtlich der erreichbaren Tragfähigkeit reiht sich dabei ein erfindungsgemäß ausgebildetes Schrägrollenlager als komplett neuer Lagertyp [z. B. Baureihe ARU (Angular Roller Unit) 207 = 40 kN] etwa in der Mitte zwischen der Tragfähigkeit eines einreihigen Rillenkugellagers [z. B. Baureihe 6207 = 25,5 kN] und der Tragfähigkeit eines einreihigen Zylinderrollenlagers [z. B. Baureihe NUP 207E = 56 kN] ein. Darüber hinaus hält sich der Anteil der spanenden Bearbeitung bei der Herstellung und Bearbeitung der Laufbahnen und der Borde des erfindungsgemäßen Schrägrollenlagers durch die in die schräg verlaufenden ebenen inneren und äußeren Mantelflächen beider Lagerringe einfach kegelförmig eingearbeiteten Laufbahnen in vertretbaren Kostengrenzen und es sind gleichzeitig durch die dabei entstehenden, einteilig mit den Lagerringen ausgebildeten Borde keine separaten Bordscheiben mehr notwendig. Im Zusammenhang mit dem Exzentermontageverfahren für die Rollenwälzkörper und mit dem verwendeten Kammkäfig zeichnet sich das erfindungsgemäße Schrägrollenlager somit insgesamt durch einen niedrigen Montageaufwand und damit durch geringe Gesamtkosten für die Lagerfertigung aus.

### Kurze Beschreibung der Zeichnungen

Eine bevorzugte Ausführungsform des erfindungsgemäß ausgebildeten Schrägrollenlagers sowie zwei alternative Varianten eines Verfahrens zu dessen Montage und zwei zugehörige Vorrichtungen zur Durchführung dieser Verfahrensvarianten werden nachfolgend unter Bezugnahme auf die beigefügten Zeichnungen näher erläutert. Dabei zeigen:
- Figur 1: eine vergrößerte Darstellung eines Querschnittes durch ein erfindungsgemäß ausgebildetes Schrägrollenlager;
- Figur 2a, 2b: eine Darstellung des ersten Schrittes der ersten Variante des erfindungsgemäßen Montageverfahrens in einer Draufsicht und einer Schnittansicht;
- Figur 3a, 3b: eine Darstellung des zweiten Schrittes der ersten Variante des erfindungsgemäßen Montageverfahrens in einer Draufsicht und einer Schnittansicht;
- Figur 4a, 4b: eine Darstellung des dritten Schrittes der ersten Variante des erfindungsgemäßen Montageverfahrens in einer Draufsicht und einer Schnittansicht;
- Figur 5a, 5b: eine Darstellung des ersten Schrittes der zweiten Variante des erfindungsgemäßen Montageverfahrens in einer Draufsicht und einer Schnittansicht;
- Figur 6a, 6b: eine Darstellung des zweiten Schrittes der zweiten Variante des erfindungsgemäßen Montageverfahrens in einer Draufsicht und einer Schnittansicht;
- Figur 7a, 7b: eine Darstellung des dritten Schrittes der zweiten Variante des erfindungsgemäßen Montageverfahrens in einer Draufsicht und einer Schnittansicht;
- Figur 8a, 8b: eine Darstellung des fünften Schrittes beider Varianten des erfindungsgemäßen Montageverfahrens in einer Draufsicht und einer Schnittansicht;
- Figur 9a, 9b: eine Darstellung des sechsten Schrittes beider Varianten des erfindungsgemäßen Montageverfahrens in einer Draufsicht und einer Schnittansicht;
- Figur 10a, 10b: eine Darstellung der Hilfsrampe zur Durchführung der ersten Variante des erfindungsgemäßen Montageverfahrens in einer Draufsicht und einer Schnittansicht;
- Figur 11a, 11b: eine Darstellung der Hilfsrampe zur Durchführung der zweiten Variante des erfindungsgemäßen Montageverfahrens in einer Draufsicht und einer Schnittansicht.

### Ausführliche Beschreibung der Zeichnungen

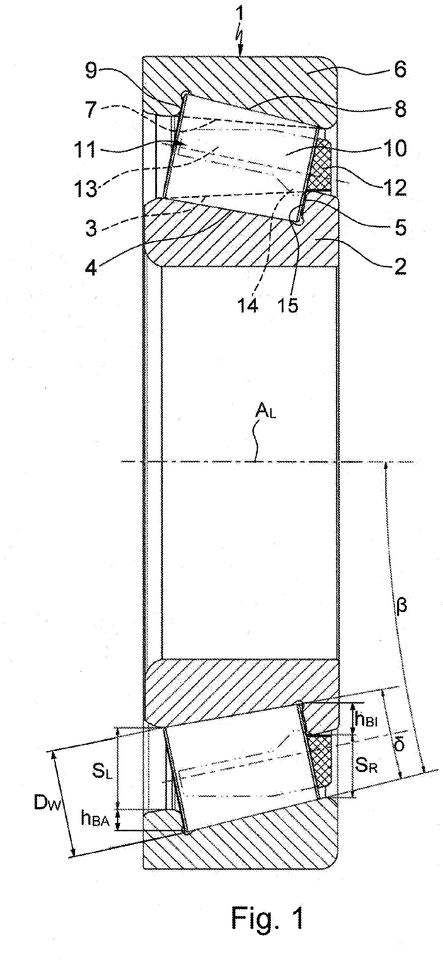

In Figur 1 ist ein Querschnitt eines als einreihiges Schrägrollenlager ausgebildeten Radialwälzlagers 1 dargestellt, welches beispielsweise als Ersatz des bisher als Festlager verwendeten Rillenkugellagers zur Lagerung der Hauptwelle in Kraftfahrzeug-Getrieben geeignet ist. Deutlich sichtbar besteht dieses Schrägrollenlager 1 aus einem inneren Lagerring 2 mit einer an dessen äußerer Mantelfläche 3 schräg zur Lagermittelachse A_{L} angeordneten inneren Laufbahn 4, die an ihrem kleinsten Durchmesser durch einen Bord 5 begrenzt wird, sowie aus einem äußeren Lagerring 6 mit einer an dessen innerer Mantelfläche 7 ebenfalls schräg zur Lagermittelachse A_{L} angeordneten äußeren Laufbahn 8, die an ihrem größten Durchmesser durch einen Bord 9 begrenzt wird. Zwischen den Lagerringen 2, 6 ist darüber hinaus eine Vielzahl auf deren Laufbahnen 4, 8 abrollender Rollenwälzkörper 10 angeordnet, die in Umfangsrichtung durch einen Lagerkäfig 11 in gleichmäßigen Abständen zueinander gehalten werden.

Desweiteren ist in Figur 1 durch die gestrichelten Linien in der oberen Lagerhälfte angedeutet, dass eine Tangente an die äußere Mantelfläche 3 des inneren Lagerrings 2 und eine Tangente an die innere Mantelfläche 7 des äußeren Lagerrings 6 zumindest im Bereich der Laufbahnen 4, 8 gegensinnig schräg zur Lagerrotationsachse A_{L} verlaufend eben ausgebildet und die Laufbahnen 4, 8 beider Lagerringe 2, 6 jeweils kegelförmig in diese Mantelflächen eingearbeitet sind. Die dabei entstehenden und die Laufbahnen 4, 8 jeweils einseitig begrenzenden Borde 5, 9 sind dadurch jeweils einteilig mit den Lagerringen 2, 6 ausgebildet.

Ebenso ist aus Figur 1 ersichtlich, dass die Rollenwälzkörper 10 als Kegelrollen ausgebildet sind, die einen Kegelwinkel δ von bevorzugt 4° aufweisen und in einem Hüllkreiswinkel β von bevorzugt 14° auf ihren Laufbahnen 4, 8 abrollen. Außerdem ist der an der kleineren Durchmesserseite der Rollenwälzkörper 10 bestehende Spalt S_{R} zwischen den Lagerringen 2, 4 kleiner als der an der größeren Durchmesserseite der Rollenwälzkörper 10 bestehende Spalt S_{L} zwischen den Lagerringen 2, 4 ausgebildet und so bemessen, dass das zweifache seines Maßes größer als der größte Durchmesser D_{W} der Rollenwälzkörper 10 ist, um das Einsetzen der Rollenwälzkörper 10 in das Radialwälz-lager 1 nach dem Exzentermontageverfahren zu ermöglichen. Zusätzlich weist der die Laufbahn 4 im inneren Lagerring 2 begrenzende Bord 5 eine Mindesthöhe h_{BI} von ca. 33% und der die Laufbahn 8 im äußeren Lagerring 6 begrenzende Bord 9 eine Mindesthöhe h_{BA} von ca. 21% des größten Durchmessers (D_{W}) der Rollenwälzkörper 10 auf, um im Lagerbetrieb auftretende hohe Axialkräfte in die eine Richtung mit möglichst geringer Bordreibung aufnehmen zu können.

Schließlich ist Figur 1 noch erkennbar, dass der Lagerkäfig 11 bevorzugt durch einen nach der Montage der Rollenwälzkörper 10 in das Radialwälzlager 1 einsetzbaren Kammkäfig gebildet wird. Der aus einem Käfigring 12 sowie aus einer Vielzahl von axialen Käfigstegen 13 bestehende Lagerkäfig 11 weist dabei an seinen verdeckt dargestellten Käfigstegen 13 mehrere ebenfalls verdeckt dargestellte, gleichmäßig umfangsverteilte und einen kleineren Innendurchmesser als der Käfigring 12 aufweisende Rastnasen 14 auf, durch die der Lagerkäfig 11 an der Innenfläche 15 des Bordes 5 am inneren Lagerring 2 axial lagefixierbar ist.

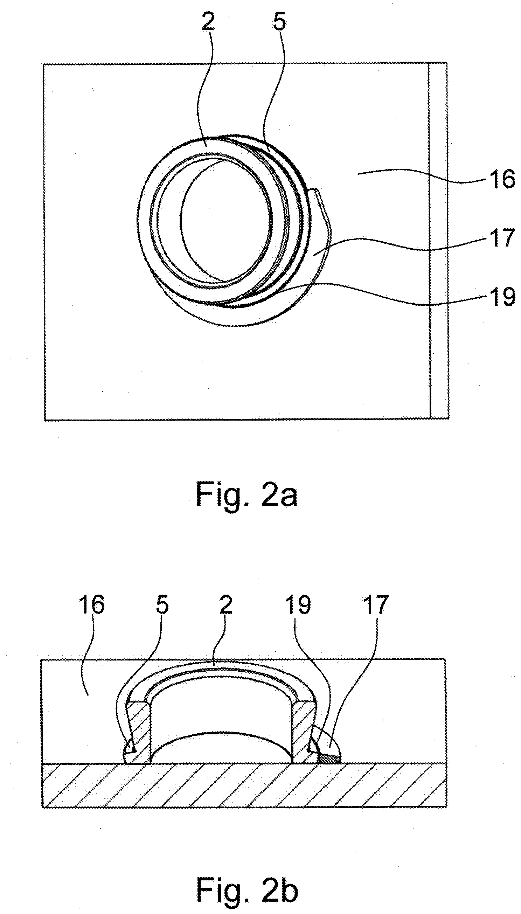

In den Figuren 2a, 2b, 3a, 3b und 4a, 4b sind desweiteren die ersten Schritte einer ersten Variante eines Montageverfahrens für das erfindungsgemäße Schrägrollenlager 1 schematisch dargestellt. Dieses Montageverfahren ist im Wesentlichen ein an sich als Montageverfahren für Rillenkugellager bekanntes, modifiziertes Exzentermontageverfahren, bei dem, wie in den Figuren 2a und 2b zu sehen ist, in einem ersten Schritt der innere Lagerring 2 mit seiner mit dem Bord 5 ausgebildeten Stirnseite auf eine horizontale Montageebene 16 mit einer konvexen sichelförmigen Hilfsrampe 17 derart aufgelegt wird, dass dieser mit seinem Bord 5 an der Innendurchmesserseite 19 der Hilfsrampe 17 anliegt.

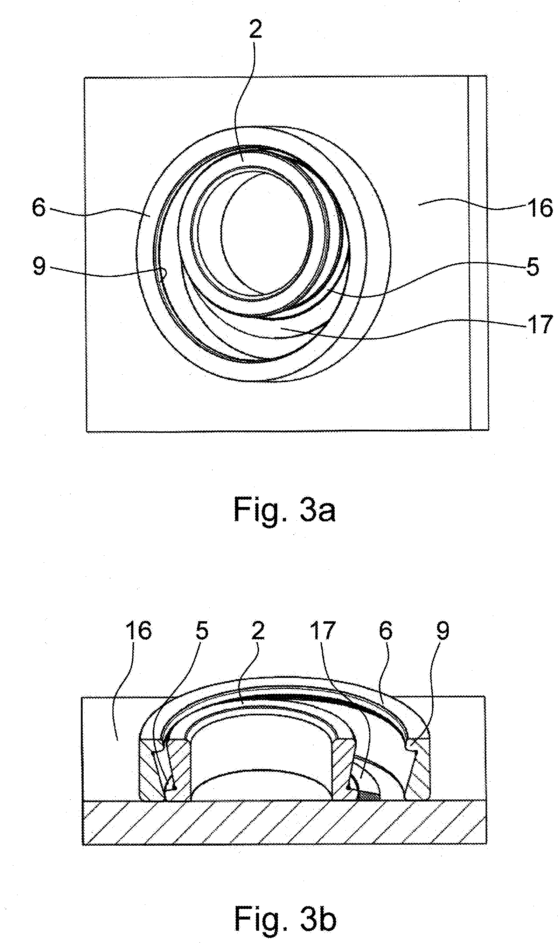

Danach wird in einem zweiten Schritt der äußere Lagerring 6 mit seiner mit dem Bord 9 ausgebildeten Stirnseite nach oben derart exzentrisch zum inneren Lagerring 2 angeordnet, dass, wie in den Figuren 3a und 3b deutlich sichtbar, einerseits die Hilfsrampe 17 zwischen den Lagerringen 2, 6 angeordnet ist und andererseits um 180° zur Mitte der Hilfsrampe 17 versetzt die Lagerringe 2, 6 aneinander anliegen.

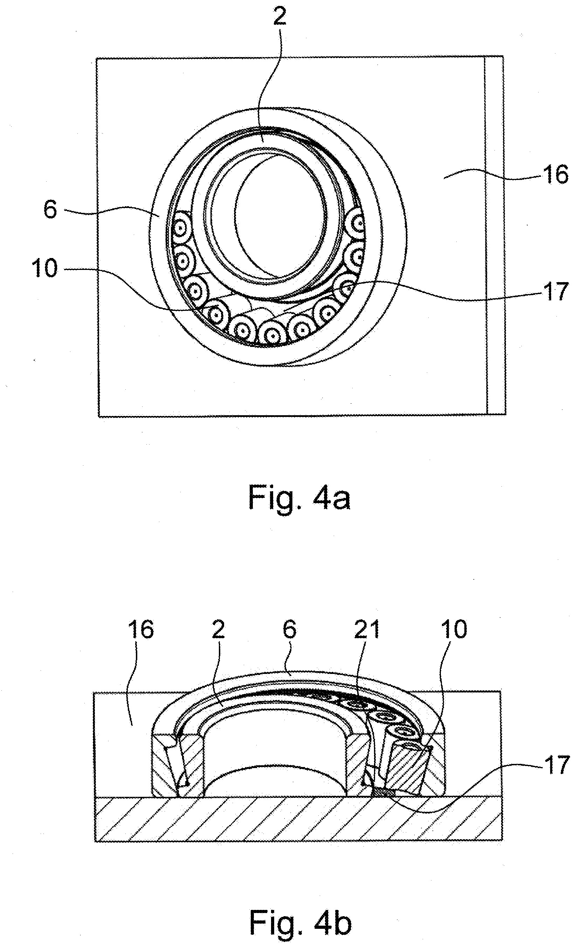

in einem dritten, in den Figuren 4a und 4b dargestellten Schritt wird dann der entstandene sichelförmige Freiraum zwischen dem äußeren Lagerring 6 und dem inneren Lagerring 2 mit den als Kegelrollen ausgebildeten Rollenwälzkörpern 10 derart befüllt, dass deren kleinere Stirnseiten auf der Schrägseite 21 der Hilfsrampe 17 aufliegen.

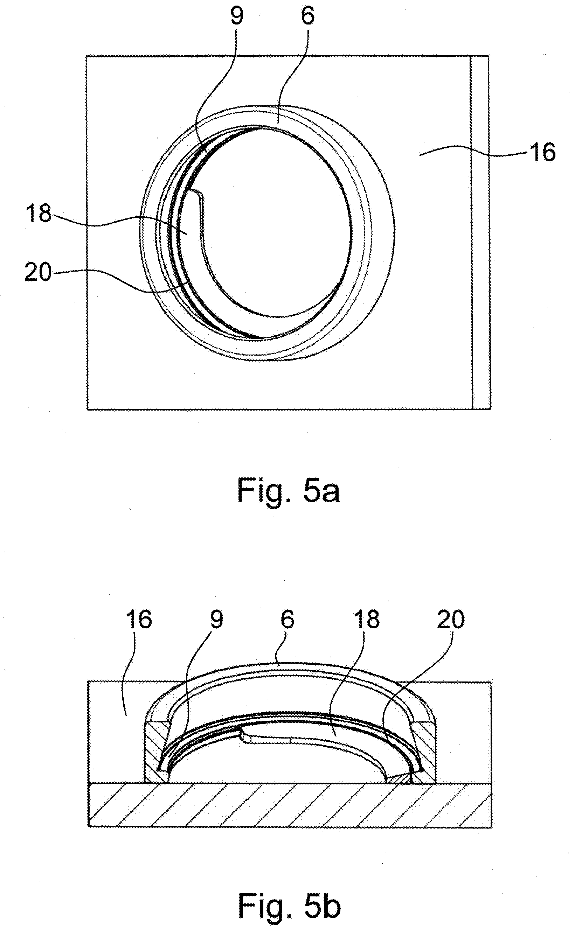

Die in den Figuren 5a, 5b, 6a, 6b und 7a, 7b dargestellte zweite Variante des Montageverfahrens für das erfindungsgemäße Schrägrollenlager ist ebenfalls ein modifiziertes Exzentermontageverfahren und unterscheidet sich von der ersten Variante dadurch, dass bei dem in den Figuren 5a und 5b abgebildeten ersten Schritt diesmal der äußere Lagerring 6 mit seiner mit dem Bord 9 ausgebildeten Stirnseite auf eine horizontale Montageebene 16 mit einer konvexen sichelförmigen Hilfsrampe 18 derart aufgelegt wird, dass dieser mit seinem Bord 9 an der Außendurchmesserseite 20 der Hilfsrampe 18 anliegt.

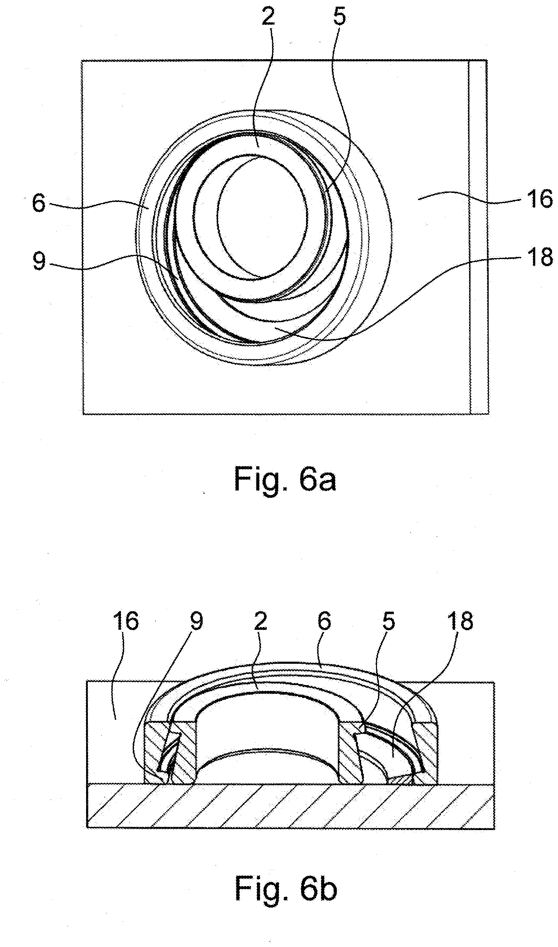

Ähnlich wie bei der ersten Variante wird danach in einem zweiten Schritt der innere Lagerring 2 mit seiner mit dem Bord 5 ausgebildeten Stirnseite nach oben derart exzentrisch zum äußeren Lagerring 6 angeordnet, dass, wie in den Figuren 6a und 6b erkennbar ist, einerseits die Hilfsrampe 18 zwischen den Lagerringen 2, 6 angeordnet ist und andererseits um 180° zur Mitte der Hilfsrampe 18 versetzt die Lagerringe 2, 6 aneinander anliegen.

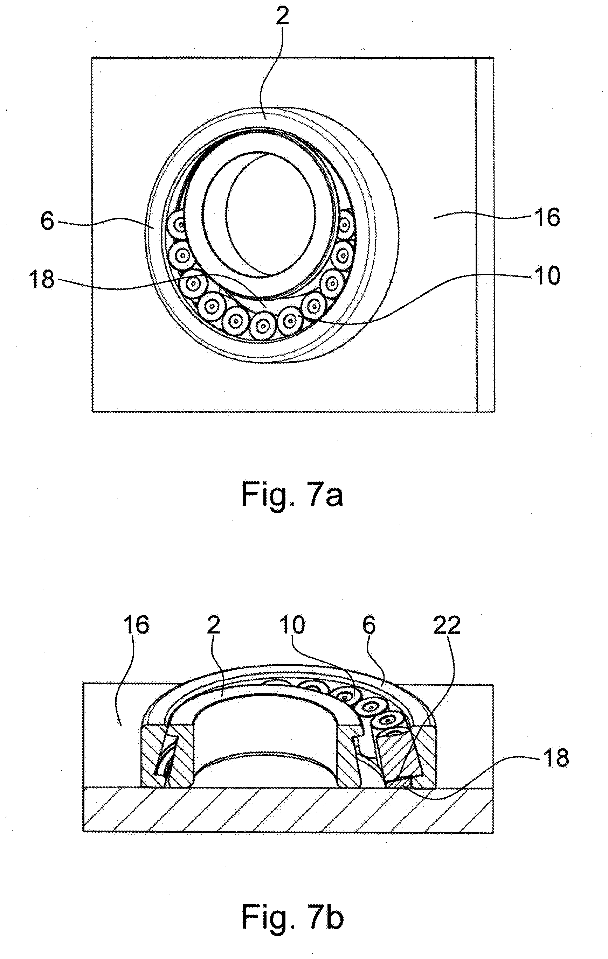

In einem dritten, in den Figuren 7a und 7b dargestellten Schritt wird dann auch hier der entstandene sichelförmige Freiraum zwischen dem inneren Lagerring 2 und dem äußeren Lagerring 6 mit den als Kegelrollen ausgebildeten Rollenwälzkörpern 10 befüllt, jedoch mit dem Unterschied, dass hierbei die größeren Stirnseiten der Rollenwälzkörper 10 auf der Schrägseite 22 der Hilfsrampe 18 aufliegen.

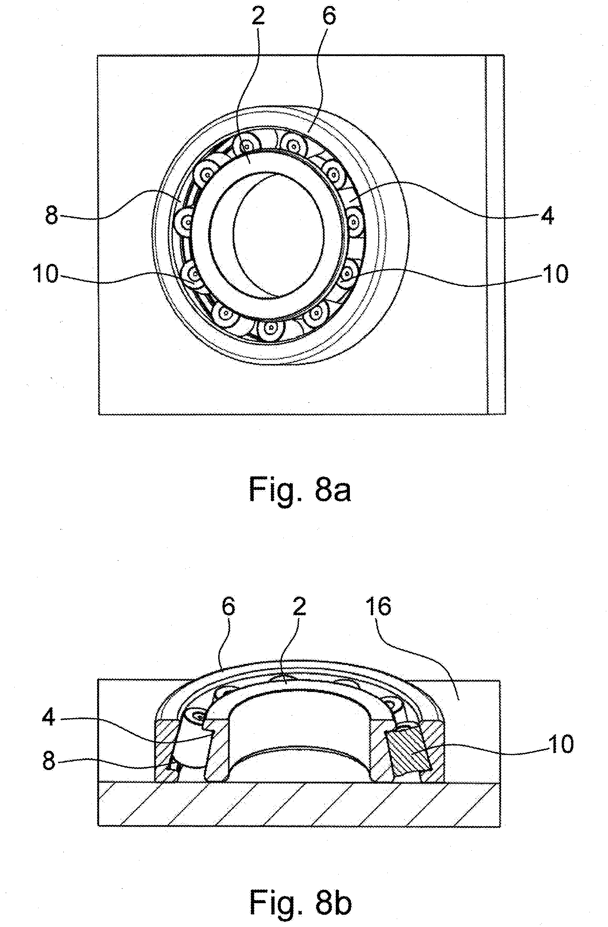

Unabhängig von den beiden Varianten des Exzentermontageverfahrens wird dann in einem vierten, in den Zeichnungen nicht näher dargestelltem Schritt der äußere Lagerring 3 in Höhe des Berührungspunktes mit dem inneren Lagerring 2 sowie in Höhe eines dem Berührungspunkt um 180° versetzten Punktes an dessen Außenmantelfläche derart eingespannt wird, dass der äußere Lagerring 3 innerhalb seiner Elastizitätsgrenze geringfügig ovalisiert wird. Anschließend wird, wie aus den Figuren 8a und 8b ersichtlich ist, in einem fünften Schritt der innere Lagerring 2 in eine koaxiale Lage zum äußeren Lagerring 3 verschoben, um die Rollenwälzkörper 10 in den Lagerringen 2, 6 unter Aufhebung der Ovalisierung des äußeren Lagerrings 3 gleichmäßig umfangsverteilt in ihren Laufbahnen 4, 8 anzuordnen.

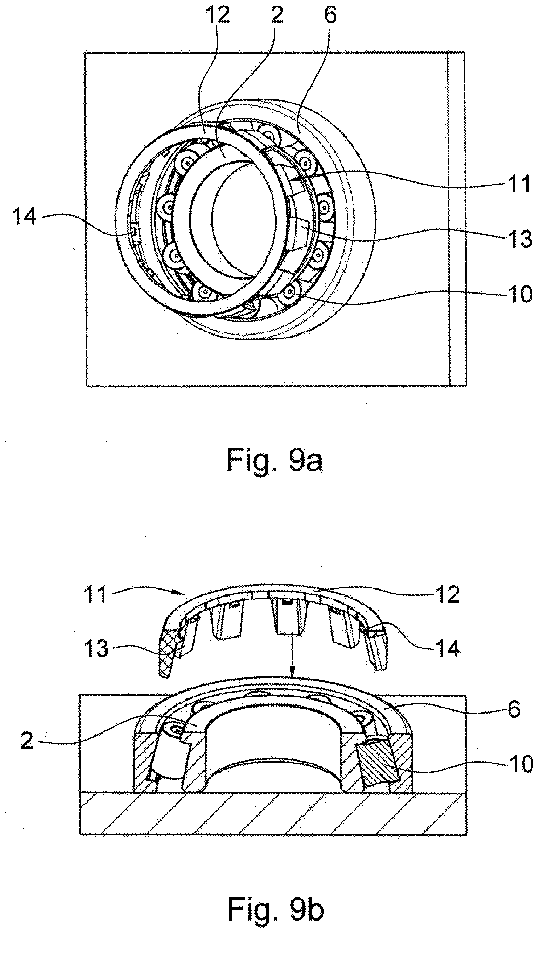

Bei Anwendung der ersten Variante des erfindungsgemäßen Exzentermontageverfahrens wird danach in einem sechsten, aus Gründen der Vereinfachung in den Zeichnungen jedoch nicht dargestellten Schritt der als Kammkäfig ausgebildete Lagerkäfig 11 mit seinen Käfigstegen 13 zwischen die Rollenwälzkörper 10 von der Seite mit deren größeren Stirnseiten her eingeführt und mit seinen Rastnasen an der Innenfläche des Bordes 9 am äußeren Lagerring 6 verrastet. Bei Anwendung der zweiten Variante des erfindungsgemäßen Exzentermontageverfahrens wird dagegen in einem sechsten Schritt der als Kammkäfig ausgebildete Lagerkäfig 11, wie in den Figuren 9a und 9b abgebildet, mit seinen Käfigstegen 13 zwischen die Rollenwälzkörper 10 von der Seite mit deren kleineren Stirnseiten her eingeführt und, wie in Figur 1 gezeigt, mit seinen Rastnasen 14 an der Innenfläche 15 des Bordes 5 am inneren Lagerring 2 verrastet.

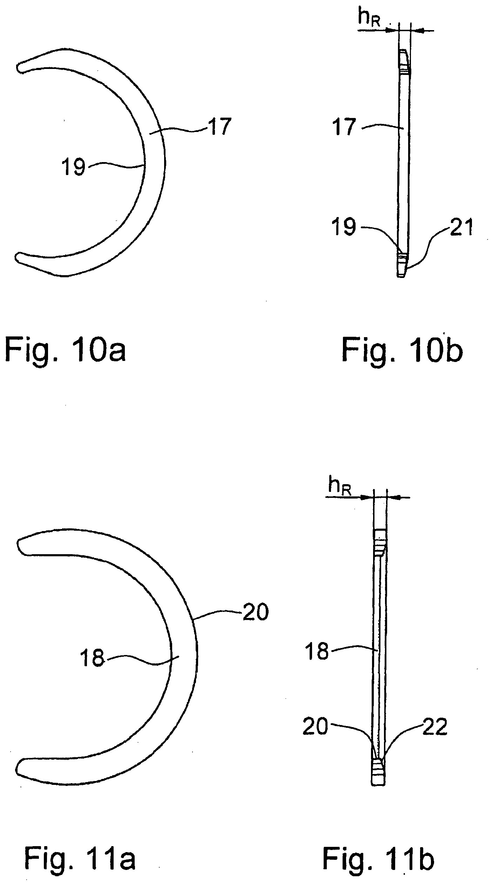

In den Figuren 10a, 10b und 11a, 11b sind schließlich noch die Hilfsrampen 17 und 18 zur Durchführung beider Varianten des erfindungsgemäßen Exzentermontageverfahrens dargestellt. Die für die erste Verfahrensvariante verwendete Hilfsrampe 17 zeichnet sich dabei dadurch aus, dass diese mit ihrer Innendurchmesserseite 19 am inneren Lagerring 2 anliegt und, wie in den Figuren 10a und 10b deutlich sichtbar ist, eine sich zum äußeren Lagerring 6 hin mit dem Neigungswinkel der Laufbahn 4 im inneren Lagerring 2 verjüngende Schrägseite 21 sowie eine maximale Rampenhöhe h_{R} aufweist, die der Bordhöhe h_{BI} am inneren Lagerring 2 entspricht.

Die für die zweite Verfahrensvariante verwendete Hilfsrampe 18 zeichnet sich dagegen dadurch aus, dass diese mit ihrer Außendurchmesserseite 20 am äußeren Lagerring 6 anliegt und, wie in den Figuren 11a und 11b zu sehen ist, eine sich zum inneren Lagerring 2 hin mit dem Neigungswinkel der Laufbahn 8 im äußeren Lagerring 6 verjüngende Schrägseite 22 sowie eine maximale Rampenhöhe h_{R} aufweist, die der Bordhöhe h_{BA} am äußeren Lagerring 6 entspricht.

**Bezugszahlenliste**

| | | | |
|---|---|---|---|
| 1 | Radialwälzlager | A_{L} | Lagermittelachse |
| 2 | innerer Lagerring | δ | Kegelwinkel |
| 3 | Tangente an die äußere Mantelfläche von 2 | β | Hüllkreiswinkel |
| | | S_{L} | Spalt zwischen 2 und 6 |
| 4 | innere Laufbahn in 2 | S_{R} | Spalt zwischen 2 und 6 |
| 5 | Bord an 4 | D_{W} | größter Durchmesser von 10 |
| 6 | äußerer Lagerring | h_{BI} | Bordhöhe an 2 |
| 7 | Tangente an die innere Mantelfläche von 6 | h_{BA} | Bordhöhe an 6 |
| | | h_{R} | Rampenhöhe |
| 8 | äußere Laufbahn in 6 | | |
| 9 | Bord an 8 | | |
| 10 | Rollenwälzkörper | | |
| 11 | Lagerkäfig | | |
| 12 | Käfigring von 11 | | |
| 13 | Käfigstege an 12 | | |
| 14 | Rastnasen an 13 | | |
| 15 | Innenfläche von 5 | | |
| 16 | Montageebene | | |
| 17 | Hilfsrampe | | |
| 18 | Hilfsrampe | | |
| 19 | Innendurchmesserseite von 17 | | |
| 20 | Außendurchmesserseite von 18 | | |
| 21 | Schrägseite an 17 | | |
| 22 | Schrägseite an 18 | | |

## Patentansprüche

1. Schrägrollenlager (1), umfassend einen inneren Lagerring (2) mit einer an dessen äußerer Mantelfläche (3) schräg zur Lagerrotationsachse (A_{L}) angeordneten inneren Laufbahn (4) und einen diese Laufbahn (4) an ihrem kleinsten Durchmesser begrenzenden Bord (5), einen äußeren Lagerring (6) mit einer an dessen innerer Mantelfläche (7) ebenfalls schräg zur Lagermittelachse (A_{L}) angeordneten äußeren Laufbahn (8) und einem diese Laufbahn (8) an ihrem größten Durchmesser begrenzenden Bord, wobei die Borde (5, 9) die Laufbahnen (4, 8) jeweils einseitig begrenzen und jeweils einteilig mit den Lagerringen (2, 6) ausgebildet sind sowie aus einer Vielzahl zwischen den Lagerringen (2, 6) angeordneter und auf deren Laufbahnen (4, 8) abrollender Rollenwälzkörper (10), die in Umfangsrichtung durch einen Lagerkäfig (11) in gleichmäßigen Abständen zueinander gehalten werden, **dadurch gekennzeichnet, dass** eine Tangente an die äußere Mantelfläche (3) des inneren Lagerrings (2) und eine Tangente an die innere Mantelfläche (7) des äußeren Lagerrings (6) zumindest im Bereich der Laufbahnen (4, 8) gegensinnig schräg zur Lagerrotationsachse (A_{L}) verlaufend eben ausgebildet und die Laufbahnen (4, 8) beider Lagerringe (2, 6) jeweils kegelförmig in diese Mantelflächen eingearbeitet sind.

2. Schrägrollenlager nach Anspruch 1, **dadurch gekennzeichnet, dass** die Rollenwälzkörper (10) bevorzugt als Kegelrollen ausgebildet sind, die einen Kegelwinkel (δ) im Bereich von 2° bis 6°, bevorzugt von 4°, aufweisen und in einem Hüllkreiswinkel (β) zwischen 7° bis 20°, bevorzugt von 14°, auf ihren Laufbahnen (4, 8) abrollen.

3. Schrägrollenlager nach Anspruch 2, **dadurch gekennzeichnet, dass** der an der kleineren Durchmesserseite der Rollenwälzkörper (10) bestehende Spalt (S_{R}) zwischen den Lagerringen (2, 4) kleiner als der an der größeren Durchmesserseite der Rollenwälzkörper (10) bestehende Spalt (S_{L}) zwischen den Lagerringen (2, 4) ausgebildet und so bemessen ist, dass das zweifache seines Maßes größer als der größte Durchmesser (Dw) der Rollenwälzkörper (10) ist.

4. Schrägrollenlager nach Anspruch 2, **dadurch gekennzeichnet, dass** der die Laufbahn (4) im inneren Lagerring (2) begrenzende Bord (5) eine Mindesthöhe (h_{BI}) von ca. 33% und der die Laufbahn (8) im äußeren Lagerring (6) begrenzende Bord (9) eine Mindesthöhe (h_{BA}) von ca. 21% des größten Durchmessers (Dw) der Rollenwälzkörper (10) aufweist.

5. Schrägrollenlager nach Anspruch 1, **dadurch gekennzeichnet, dass** der Lagerkäfig (11) durch einen nach der Montage der Rollenwälzkörper (10) in das Radialwälzlager (1) einsetzbaren und aus einem Käfigring (12) sowie aus einer Vielzahl von axialen Käfigstegen (13) bestehenden Kammkäfig gebildet wird.

6. Schrägrollenlager nach Anspruch 5, **dadurch gekennzeichnet, dass** der Lagerkäfig (11) an seinen Käfigstegen (13) mehrere gleichmäßig umfangsverteilte und einen kleineren Innendurchmesser als der Käfigring (12) aufweisende Rastnasen (14) aufweist, durch die der Lagerkäfig (11) an der Innenfläche (15) des Bordes (5) am inneren Lagerring (2) axial lagefixierbar ist.

7. Schrägrollenlager nach Anspruch 5, **dadurch gekennzeichnet, dass** der Lagerkäfig (11) an seinen Käfigstegen (13) mehrere gleichmäßig umfangsverteilte und geneigt zur Lagerrotationsachse (A_{L}) verlaufende Raststege aufweist, durch die der Lagerkäfig (11) an der Innenfläche des Bordes (9) am äußeren Lagerrings (6) axial lagefixierbar ist.

8. Verfahren zur Montage eines Schrägrollenlagers nach einem der Ansprüche 1 bis 7, bei dem das Schrägrollenlager (1) nach einem an sich als Montageverfahren für Rillenkugellager bekannten Exzentermontagerverfahren montiert wird, **dadurch gekennzeichnet, dass**
• in einem ersten Schritt der innere Lagerring (2) mit seiner mit dem Bord (5) ausgebildeten Stirnseite auf eine horizontale Montageebene (16) mit einer konvexen sichelförmigen Hilfsrampe (17) derart aufgelegt wird, dass dieser mit seinem Bord (5) an der Innendurchmesserseite (19) der Hilfsrampe (17) anliegt.
• in einem zweiten Schritt der äußere Lagerring (6) mit seiner mit dem Bord (9) ausgebildeten Stirnseite nach oben derart exzentrisch zum inneren Lagerring (2) angeordnet wird, dass einerseits die Hilfsrampe (17) zwischen den Lagerringen (2, 6) angeordnet ist und andererseits um 180° zur Mitte der Hilfsrampe (17) versetzt die Lagerringe (2, 6) aneinander anliegen.
• in einem dritten Schritt der entstandene sichelförmige Freiraum zwischen dem äußeren Lagerring (6) und dem inneren Lagerring (2) mit den als Kegelrollen ausgebildeten Rollenwälzkörpern (10) derart befüllt wird, dass deren kleinere Stirnseiten auf der Schrägseite (21) der Hilfsrampe (17) aufliegen.

9. Verfahren zur Montage eines Schrägrollenlagers nach wenigstens einem der Ansprüche 1 bis 7, bei dem das Schrägrollenlager (1) nach einem an sich als Montageverfahren für Rillenkugellager bekannten Exzentermontagerverfahren montiert wird. **dadurch gekennzeichnet, dass**
• in einem ersten Schritt der äußere Lagerring (6) mit seiner mit dem Bord (9) ausgebildeten Stirnseite auf eine horizontale Montageebene (16) mit einer konvexen sichelförmigen Hilfsrampe (18) derart aufgelegt wird, dass dieser mit seinem Bord (9) an der Außendurchmesserseite (20) der Hilfsrampe (18) anliegt.
• in einem zweiten Schritt der innere Lagerring (2) mit seiner mit dem Bord (5) ausgebildeten Stirnseite nach oben derart exzentrisch zum äußeren Lagerring (6) angeordnet wird, dass einerseits die Hilfsrampe (18) zwischen den Lagerringen (2, 6) angeordnet ist und andererseits um 180° zur Mitte der Hilfsrampe (18) versetzt die Lagerringe (2, 6) aneinander anliegen.
• in einem dritten Schritt der entstandene sichelförmige Freiraum zwischen dem inneren Lagerring (2) und dem äußeren Lagerring (6) mit den als Kegelrollen ausgebildeten Rollenwälzkörpern (10) derart befüllt wird, dass deren größere Stirnseiten auf der Schrägseite (22) der Hilfsrampe (18) aufliegen.

10. Verfahren nach Anspruch 8 oder 9, **dadurch gekennzeichnet, dass** in einem vierten Schritt der äußere Lagerring (3) in Höhe des Berührungspunktes mit dem inneren Lagerring (2) sowie in Höhe eines dem Berührungspunkt um 180° versetzten Punktes an dessen Außenmantelfläche derart eingespannt wird, dass der äußere Lagerring (3) innerhalb seiner Elastizitätsgrenze geringfügig ovalisiert wird.

11. Verfahren nach Anspruch 10, **dadurch gekennzeichnet, dass** in einem fünften Schritt der innere Lagerring (2) in eine koaxiale Lage zum äußeren Lagerring (3) verschoben wird und die Rollenwälzkörper (10) in ihren Laufbahnen (4, 8) in den Lagerringen (2, 6) unter Aufhebung der Ovalisierung des äußeren Lagerrings (3) gleichmäßig umfangsverteilt werden.

12. Verfahren nach Anspruch 11, **dadurch gekennzeichnet, dass** in einem sechsten Schritt der als Kammkäfig ausgebildete Lagerkäfig (11) mit seinen Käfigstegen (13) zwischen die Rollenwälzkörper (10) von der Seite mit deren kleineren Stirnseiten her eingeführt und mit seinen Rastnasen (14) an der Innenfläche (15) des Bordes (5) am inneren Lagerring (2) verrastet wird.

13. Verfahren nach Anspruch 11, **dadurch gekennzeichnet, dass** in einem sechsten Schritt der als Kammkäfig ausgebildete Lagerkäfig (11) mit seinen Käfigstegen (13) zwischen die Rollenwälzkörper (10) von der Seite mit deren größeren Stirnseiten her eingeführt und mit seinen Raststegen an der Innenfläche des Bordes (9) am äußeren Lagerrings (6) verrastet wird.

14. Vorrichtung zur Durchführung des Verfahrens nach Anspruch 8, **dadurch gekennzeichnet, dass** die mit ihrer Innendurchmesserseite (19) am inneren Lagerring (2) anliegende Hilfsrampe (17) eine sich zum äußeren Lagerring (3) hin mit dem Neigungswinkel der Laufbahn (4) im inneren Lagerring (2) verjüngende Schrägseite (21) sowie eine maximale Rampenhöhe (h_{R}) aufweist, die der Bordhöhe (h_{BI}) am inneren Lagerring (2) entspricht.

15. Vorrichtung zur Durchführung des Verfahrens nach Anspruch 9, **dadurch gekennzeichnet, dass** die mit ihrer Außendurchmesserseite (20) am äußeren Lagerring (6) anliegende Hilfsrampe (18) eine sich zum inneren Lagerring (2) hin mit dem Neigungswinkel der Laufbahn (8) im äußeren Lagerring (6) verjüngende Schrägseite (22) sowie eine maximale Rampenhöhe (h_{R}) aufweist, die der Bordhöhe (h_{BA}) am äußeren Lagerring (6) entspricht.

## Claims

1. Angular contact roller bearing (1) comprising an inner bearing ring (2) with an inner raceway (4), which is arranged on the outer shell surface (3) of said inner bearing ring so as to be oblique with respect to the bearing axis of rotation (A_{L}), and comprising a rim (5) which delimits said raceway (4) at its smallest diameter, comprising an outer bearing ring (6) with an outer raceway (8), which is arranged on the inner shell surface (7) of said outer bearing ring likewise so as to be oblique with respect to the bearing central axis (A_{L}), and comprising a rim which delimits said raceway (8) at its greatest diameter, wherein the rims (5, 9) delimit the raceways (4, 8) in each case on one side and are each formed integrally with the bearing rings (2, 6), and comprising a multiplicity of roller-type rolling bodies (10) which are arranged between the bearing rings (2, 6) and which roll on the raceways (4, 8) of said bearing rings and which are held with uniform spacings to one another in a circumferential direction by means of a bearing cage (11), **characterized in that** a tangent to the outer shell surface (3) of the inner bearing ring (2) and a tangent to the inner shell surface (7) of the outer bearing ring (6) are, at least in the region of the raceways (4, 8), of planar form so as to run in the opposite directions obliquely with respect to the bearing axis of rotation (A_{L}), and the raceways (4, 8) of the two bearing rings (2, 6) are each formed in conical fashion into said shell surfaces.

2. Angular contact roller bearing according to Claim 1, **characterized in that** the roller-type rolling bodies (10) are preferably formed as tapered rollers which have a taper angle (δ) in the range from 2° to 6°, preferably of 4°, and which roll with an envelope circle angle (β) of between 7° and 20°, preferably of 14°, on their raceways (4, 8).

3. Angular contact roller bearing according to Claim 2, **characterized in that** the gap (S_{R}) between the bearing rings (2, 4) which exists on the smaller diameter side of the roller-type rolling bodies (10) is designed to be smaller than the gap (S_{L}) between the bearing rings (2, 4) which exists on the larger diameter side of the roller-type rolling bodies (10) and is dimensioned such that two times its dimension is greater than the greatest diameter (D_{w}) of the roller-type rolling bodies (10).

4. Angular contact roller bearing according to Claim 2, **characterized in that** the rim (5) which delimits the raceway (4) in the inner bearing ring (2) has a minimum height (h_{BI}) of approximately 33% and the rim (9) which delimits the raceway (8) in the outer bearing ring (6) has a minimum height (h_{BA}) of approximately 21% of the greatest diameter (Dw) of the roller-type rolling bodies (10) .

5. Angular contact roller bearing according to Claim 1, **characterized in that** the bearing cage (11) is formed by a comb-type cage which is insertable into the radial rolling bearing (1) after the installation of the roller-type rolling bodies (10) and which is composed of a cage ring (12) and of a multiplicity of axial cage webs (13).

6. Angular contact roller bearing according to Claim 5, **characterized in that** the bearing cage (11) has, on its cage webs (13), multiple uniformly circumferentially distributed detent lugs (14) which have a smaller inner diameter than the cage ring (12) and by means of which the bearing cage (11) is axially fixable in position on the inner surface (15) of the rim (5) on the inner bearing ring (2).

7. Angular contact roller bearing according to Claim 5, **characterized in that** the bearing cage (11) has, on its cage webs (13), multiple uniformly circumferentially distributed detent webs which run so as to be inclined with respect to the bearing axis of rotation (A_{L}) and by means of which the bearing cage (11) is axially fixable in position on the inner surface of the rim (9) on the outer bearing ring (6).

8. Method for assembling an angular contact roller bearing according to one of Claims 1 to 7, in which the angular contact roller bearing (1) is assembled in accordance with an eccentric assembly method known per se as an assembly method for deep-groove ball bearings, **characterized in that**,
• in a first step, the inner bearing ring (2) is placed, with its face side formed with the rim (5), onto a horizontal assembly plane (16) with a convex sickle-shaped auxiliary ramp (17) in such a way that said inner bearing ring bears with its rim (5) against the inner diameter side (19) of the auxiliary ramp (17),
• in a second step, the outer bearing ring (6) is arranged, with its face side formed with the rim (9) upward, eccentrically with respect to the inner bearing ring (2) such that, at one side, the auxiliary ramp (17) is arranged between the bearing rings (2, 6) and, at the other side, offset 180° with respect to the center of the auxiliary ramp (17), the bearing rings (2, 6) bear against one another,
• in a third step, the sickle-shaped free space formed between the outer bearing ring (6) and the inner bearing ring (2) is filled with the roller-type rolling bodies (10) in the form of tapered rollers such that the relatively small face sides of said roller-type rolling bodies lie on the oblique side (21) of the auxiliary ramp (17).

9. Method for assembling an angular contact roller bearing according to at least one of Claims 1 to 7, in which the angular contact roller bearing (1) is assembled in accordance with an eccentric assembly method known per se as an assembly method for deep-groove ball bearings, **characterized in that**,
• in a first step, the outer bearing ring (6) is placed, with its face side formed with the rim (9), onto a horizontal assembly plane (16) with a convex sickle-shaped auxiliary ramp (18) in such a way that said outer bearing ring bears with its rim (9) against the outer diameter side (20) of the auxiliary ramp (18),
• in a second step, the inner bearing ring (2) is arranged, with its face side formed with the rim (5) upward, eccentrically with respect to the outer bearing ring (6) such that, at one side, the auxiliary ramp (18) is arranged between the bearing rings (2, 6) and, at the other side, offset 180° with respect to the center of the auxiliary ramp (18), the bearing rings (2, 6) bear against one another,
• in a third step, the sickle-shaped free space formed between the inner bearing ring (2) and the outer bearing ring (6) is filled with the roller-type rolling bodies (10) in the form of tapered rollers such that the relatively large face sides of said roller-type rolling bodies lie on the oblique side (22) of the auxiliary ramp (18).

10. Method according to Claim 8 or 9, **characterized in that**, in a fourth step, the outer bearing ring (3) is clamped, at the level of the contact point with the inner bearing ring (2) and at the level of a point on the outer shell surface of said outer bearing ring which is offset 180° with respect to the contact point, such that the outer bearing ring (3) is slightly ovalized within its elasticity limit.

11. Method according to Claim 11, **characterized in that**, in a fifth step, the inner bearing ring (2) is displaced into a coaxial position with respect to the outer bearing ring (3), and the roller-type rolling bodies (10) are uniformly circumferentially distributed in their raceways (4, 8) in the bearing rings (2, 6), with the ovalization of the outer bearing ring (3) being eliminated.

12. Method according to Claim 11, **characterized in that**, in a sixth step, the bearing cage (11) in the form of a comb-type cage is inserted with its cage webs (13) between the roller-type rolling bodies (10) from the side with the relatively small face sides of said roller-type rolling bodies, and said bearing cage is engaged with its detent lugs (14) with detent action against the inner surface (15) of the rim (5) on the inner bearing ring (2).

13. Method according to Claim 11, **characterized in that**, in a sixth step, the bearing cage (11) in the form of a comb-type cage is inserted with its cage webs (13) between the roller-type rolling bodies (10) from the side with the relatively large face sides of said roller-type rolling bodies, and said bearing cage is engaged with its detent webs with detent action against the inner surface of the rim (9) on the outer bearing ring (6).

14. Device for carrying out the method according to Claim 8, **characterized in that** the auxiliary ramp (17) which bears with its inner diameter side (19) against the inner bearing ring (2) has an oblique side (21), which tapers toward the outer bearing ring (3) with the angle of inclination of the raceway (4) in the inner bearing ring (2), and a maximum ramp height (h_{R}) which corresponds to the rim height (h_{BI}) on the inner bearing ring (2).

15. Device for carrying out the method according to Claim 9, **characterized in that** the auxiliary ramp (18) which bears with its outer diameter side (20) against the outer bearing ring (6) has an oblique side (22), which tapers toward the inner bearing ring (2) with the angle of inclination of the raceway (8) in the outer bearing ring (6), and a maximum ramp height (h_{R}) which corresponds to the rim height (h_{BA}) on the outer bearing ring (6).

## Revendications

1. Palier à rouleaux obliques (1) comprenant une bague de palier intérieure (2) pourvue d'un chemin de roulement intérieur (4) disposé au niveau de sa surface latérale extérieure (3) obliquement par rapport à l'axe de rotation de palier (Al) et un bord (5) délimitant ce chemin de roulement (4) au niveau de son plus petit diamètre, une bague de palier extérieure (6) pourvue d'un chemin de roulement extérieur (8) disposé au niveau de sa surface latérale intérieure (7) également obliquement par rapport à l'axe central de palier (A_{L}) et un bord délimitant ce chemin de roulement (8) au niveau de son plus grand diamètre, les bords (5, 9) délimitant chacun d'un côté les chemins de roulement (4, 8) et étant chacun formés d'une seule pièce avec les bagues de palier (2, 6) et à partir d'une pluralité d'éléments de roulement (10) qui sont disposés entre les bagues de palier (2, 6), qui roulent sur leurs chemins de roulement (4, 8) et qui sont maintenus dans la direction circonférentielle par une cage de palier (11) à des intervalles réguliers, **caractérisés en ce qu'**une tangente à la surface latérale extérieure (3) de la bague de palier intérieure (2) et une tangente à la surface latérale intérieure (7) de la bague de palier extérieure (6) sont formées dans un plan de manière à s'étendre obliquement par rapport à l'axe de rotation de palier (A_{L}) dans des directions opposées au moins dans la région des chemins de roulement (4, 8) et les chemins de roulement (4, 8) des deux bagues de palier (2, 6) sont incorporés chacun en forme de cône dans ces surfaces latérales.

2. Palier à rouleaux obliques selon la revendication 1, **caractérisé en ce que** les éléments de roulement (10) sont de préférence conçus comme des rouleaux obliques qui présentent un angle de cône (δ) de 2° à 6°, de préférence de 4°, et roulent sur leurs chemins de roulement (4, 8) dans un angle de cercle d'enveloppe (β) de 7° à 20°, de préférence de 14°.

3. Palier à rouleaux obliques selon la revendication 2, **caractérisé en ce que** la fente (S_{R}) située du côté du plus petit diamètre des éléments de roulement (10) et entre les bagues de palier (2, 4) est plus petite que la fente (S_{L}) située du côté du plus grand diamètre des éléments de roulement (10) et entre les bagues de palier (2, 4) et est dimensionnée de manière à être deux fois plus grande que le plus grand diamètre (Dw) des éléments de roulement (10).

4. Palier à rouleaux obliques selon la revendication 2, **caractérisé en ce que** le bord (5) délimitant le chemin de roulement (4) dans la bague de palier intérieure (2) a une hauteur minimale (h_{BI}) d'environ 33 % et le bord (9) délimitant le chemin de roulement (8) dans la bague de palier extérieure (6) a une hauteur minimale (h_{BA}) d'environ 21 % du plus grand diamètre (Dw) des éléments de roulement (10).

5. Palier à rouleaux obliques selon la revendication 1, **caractérisé en ce que** la cage de palier (11) peut être insérée dans le palier à rouleaux radial (1) après le montage des éléments de roulement (10) et est formée d'une bague de cage (12) et d'une cage en peigne formée d'une pluralité de nervures de cage axiales (13).

6. Palier à rouleaux obliques selon la revendication 5, **caractérisé en ce que** la cage de palier (11) présente au niveau de ses nervures de cage (13) une pluralité d'ergots d'encliquetage (14) qui sont répartis uniformément sur la périphérie, qui ont un diamètre intérieur à celui de la bague de cage (12) et qui permettent de fixer axialement en position la cage de palier (11) à la surface intérieure (15) du bord (5) de la bague de palier intérieure (2).

7. Palier à rouleaux obliques selon la revendication 5, **caractérisé en ce que** la cage de palier (11) comporte au niveau de ses nervures de cage (13) une pluralité de nervures d'encliquetage qui sont réparties uniformément sur la périphérie, qui s'étendent obliquement par rapport à l'axe de rotation de palier (A_{L}) et qui permettent de fixer axialement en position la cage de palier (11) à la surface intérieure du bord (9) de la bague de palier extérieure (6).

8. Procédé de montage d'un palier à rouleaux obliques selon l'une des revendications 1 à 7, dans lequel le palier à rouleaux obliques (1) est monté conformément à un procédé de montage excentrique connu en soi comme procédé de montage de palier à billes rainuré, **caractérisé en ce que**
• dans une première étape, la bague de palier intérieure (2) est placée, avec son côté frontal pourvu du bord (5), sur un plan de montage horizontal (16) comportant une rampe auxiliaire falciforme convexe (17) de telle sorte que celle-ci vient en appui, avec ledit bord (5), sur le côté diamètre intérieur (19) de la rampe auxiliaire (17),
• dans une deuxième étape, la bague de palier extérieure (6) est disposée, avec son côté frontal pourvu du bord (9), excentriquement vers le haut par rapport à la bague de palier intérieure (2) de telle sorte que d'une part la rampe auxiliaire (17) soit disposée entre les bagues de palier (2, 6) et que d'autre part les bagues de palier (2, 6) viennent en appui l'une sur l'autre avec un décalage de 180° par rapport au centre de la rampe auxiliaire (17),
• dans une troisième étape, l'espace libre falciforme résultant entre la bague de palier extérieure (6) et la bague de palier intérieure (2) est rempli avec les éléments de roulement (10) conçus comme des rouleaux coniques de telle sorte que leurs petits côtés frontaux viennent en appui sur le côté oblique (21) de la rampe auxiliaire (17).

9. Procédé de montage d'un palier à rouleaux obliques selon l'une au moins des revendications 1 à 7, dans lequel le palier à rouleaux obliques (1) est monté conformément à un procédé de montage excentrique connu en soi comme procédé de montage de palier à billes rainuré, **caractérisé en ce que**
• dans une première étape, la bague de palier extérieure (6) est placée, avec son côté frontal pourvu du bord (9), sur un plan de montage horizontal (16) comportant une rampe auxiliaire falciforme convexe (18) de telle sorte que celle-ci vient en appui, avec ledit bord (9), sur le côté diamètre extérieur (20) de la rampe auxiliaire (18),
• dans une deuxième étape, la bague de palier intérieure (2) est disposée, avec son côté frontal pourvu du bord (5), excentriquement vers le haut par rapport à la bague de palier extérieure (6) de telle sorte que d'une part la rampe auxiliaire (18) soit disposée entre les bagues de palier (2, 6) et que d'autre part les bagues de palier (2, 6) viennent en appui l'une sur l'autre avec un décalage de 180° par rapport au centre de la rampe auxiliaire (18),
• dans une troisième étape, l'espace libre falciforme résultant entre la bague de palier intérieure (2) et la bague de palier extérieure (6) est rempli avec les éléments de roulement (10) conçus comme des rouleaux coniques de telle sorte que leurs grands côtés frontaux viennent en appui sur le côté oblique (22) de la rampe auxiliaire (18).

10. Procédé selon la revendication 8 ou 9, **caractérisé en ce que**, dans une quatrième étape, la bague de palier extérieure (3) est pincée à hauteur du point de contact avec la bague de palier intérieure (2) et à hauteur d'un point décalé de 180° du point de contact sur sa surface latérale extérieure de telle sorte que la bague de palier extérieure (3) soit légèrement ovalisée dans sa limite d'élasticité.

11. Procédé selon la revendication 10, **caractérisé en ce que**, dans une cinquième étape, la bague de palier intérieure (2) est déplacée par coulissement jusque dans une position coaxiale à la bague de palier extérieure (3) et les éléments de roulement (10) sont répartis uniformément sur la périphérie dans leurs chemins de roulement (4, 8) situés dans les bagues de palier (2, 6) par suppression de l'ovalisation de la bague de palier extérieure (3).

12. Procédé selon la revendication 11, **caractérisé en ce que**, dans une sixième étape, la cage de palier (11), conçue comme une cage en peigne, est insérée, avec ses nervures de cage (13), entre les éléments de roulement (10) depuis le côté pourvu de leurs plus petits côtés frontaux et est encliquetée, avec ses ergots d'encliquetage (14), sur la surface intérieure (15) du bord (5) de la bague de palier intérieure (2).

13. Procédé selon la revendication 11, **caractérisé en ce que**, dans une sixième étape, la cage de palier (11), conçue comme une cage en peigne, est insérée, avec ses nervures de cage (13), entre les éléments de roulement (10) depuis le côté pourvu de leurs plus grands côtés frontaux et est encliquetée, avec ses ergots d'encliquetage, sur la surface intérieure du bord (9) de la bague de palier extérieure (6).

14. Dispositif destiné à la mise en oeuvre du procédé selon la revendication 8, **caractérisé en ce que** la rampe auxiliaire (17), venant en appui avec son côté diamètre intérieur (19) sur la bague de palier intérieure (2), comporte un côté oblique (21) qui s'amincit en direction de la bague de palier extérieure (3) avec l'angle d'inclinaison du chemin de roulement (4) situé dans la bague de palier intérieure (2), et a une hauteur de rampe maximale (h_{R}) qui correspond à la hauteur de bord (h_{BI}) de la bague de palier intérieure (2) .

15. Dispositif destiné à la mise en oeuvre du procédé selon la revendication 9, **caractérisé en ce que** la rampe auxiliaire (18), venant en appui avec son côté diamètre extérieur (20) sur la bague de palier extérieure (6), comporte un côté oblique (22) qui s'amincit en direction de la bague de palier extérieure (2) avec l'angle d'inclinaison du chemin de roulement (8) situé dans la bague de palier extérieure (6), et a une hauteur de rampe maximale (h_{R}) qui correspond à la hauteur de bord (h_{BA}) de la bague de palier intérieure (6) .
